# EUROPÄISCHE PATENTSCHRIFT

(11) **EP 2 770 594 B1**
(45) Veröffentlichungstag und Bekanntmachung des Hinweises auf die Patenterteilung: **16.10.2019**
(21) Anmeldenummer: 14155982.3
(22) Anmeldetag: 20.02.2014
(51) Int. Cl.: H02G 1/00

(54) **Verfahren zur Installation von Elektroleitungen sowie zugehörige Vorrichtung**
Method for the installation of electrical cables and corresponding device
Procédé d'installation de lignes électriques et dispositif associé

(30) Priorität: 22.02.2013 DE 102013202924
(43) Veröffentlichungstag der Anmeldung: 27.08.2014
(73) Patentinhaber: Günay, Mehmet, 52146 Würselen (DE)
(72) Erfinder: Günay, Mehmet, 52146 Würselen (DE)
(74) Vertreter: Bauer, Dirk

(56) Entgegenhaltungen:
- EP-A1- 0 996 208
- DE-U1- 20 100 991
- DE-U1- 20 106 520
- JP-A- H10 288 212
- US-A- 5 690 454
- US-A1- 2008 263 882

## Beschreibung

### Einleitung

Die Erfindung betrifft ein Verfahren zur Erstellung einer Elektroinstallation in einer Wand, die zwei parallel und in einem Abstand zu einander angeordnete plattenförmige Bauelemente, einen zwischen den Bauelementen angeordneten Innenraum und eine in dem Innenraum befindliche Haltekonstruktion aufweist, wobei zunächst ein erstes der beiden Bauelemente an der Haltekonstruktion befestigt wird, anschließend erste Installationsschritte durchgeführt werden, danach das zweite Bauelement an der Haltekonstruktion befestigt wird und schließlich die restlichen Installationsschritte durchgeführt werden, mit den folgenden Verfahrensschritten:
a) Vor der Befestigung des zweiten Bauelements wird an der Installationsstelle an dem ersten Bauelement ein Fixierelement verankert.
b) In dem lediglich von dem ersten Bauelement begrenzten Innenraum wird mindestens ein Anschlusskabel so verlegt, dass ein Endabschnitt des Anschlusskabels an dem Fixierelement verankert wird.
c) In dem zweiten Bauelement wird von dem Innenraum her ein Markierungsdurchbruch an der Stelle des Fixierelements geschaffen, um die Installationsstelle auf einer Außenseite des zweiten Bauelements zu markieren.
d) Nach der Befestigung des zweiten Bauelements wird an der Installationsstelle ein Installationsdurchbruch in dem zweiten Bauelement geschaffen.
e) Durch den Installationsdurchbruch hindurch wird ein dem Endabschnitt zugeordnetes Ende des Anschlusskabels ergriffen und die Elektroinstallation fertig gestellt.

### Stand der Technik

Beim Trockenbau von Wänden kommt es bei der Verlegung einer Elektroinstallation häufig zu Komplikationen. Die Trockenbauwände bestehen aus einer Haltekonstruktion und aus zwei parallel zueinander ausgerichteten Bauelementen, die an der Haltekonstruktion befestigt werden und einen Innenraum bilden. Zwischen den beiden Bauelementen wird eine Hohlraumdämmung zur Isolierung angebracht. Bei der Montage der Trockenbauwände wird nach dem Einbau der Haltekonstruktion ein erstes Bauelement an der Haltekonstruktion befestigt. Es folgt die Elektroinstallation, wobei auf der Innenseite des Innenraumes bzw. der später nicht sichtbaren Seite des ersten Bauelements die Positionen für die Anschlusskabel abgemessen wird und die Anschlusskabel an diese Positionen gelegt werden. Danach wird eine Hohlraumdämmung auf der Innenseite des Bauelementes angebracht. Dieser Schritt führt später zu Komplikationen, da durch das Anbringen der Hohlraumdämmung die Anschlussleitungen verrutschen können und sich somit nicht mehr an ihren vorherigen Positionen befinden. Anschließend montiert der Trockenbauer das zweite Bauelement, welches die verrutschten Anschlusskabel verdeckt. Der Elektriker vermisst nun an dem zweiten Bauelement erneut die Positionen der Installationsstellen und bohrt mittels einer Lochsäge Löcher an die Stellen wo später Verteilerdosen, Lampen u. ä. angebracht werden sollen. Da die Positionen der Anschlusskabel nicht mehr genau zu bestimmen sind, findet eine mühsame und zeitaufwendige Suche der Anschlusskabel in dem Hohlraum statt. Oft kommt teure Kameratechnik zum Einsatz oder müssen unnötige Löcher gebohrt werden, die anschließend schwierig zu verschließen und verspachteln sind.

In der EP 0 996 208 B1 wird eine Vorrichtung beschrieben, die in dem Video: https://www.youtube.com/watch?v=B2Z4ms7OaCl gezeigt wird und das zeitaufwendige und mühsame Suchen der Anschlusskabel vermeiden soll. Es handelt sich hierbei um eine Positioniervorrichtung, die nach Vermessung der Positionen der Anschlusskabel an der Innenseite des ersten Bauelements angebracht wird. Die Anschlusskabel werden während der Verlegung an einer Haltevorrichtung der Positioniervorrichtung befestigt. Mittels eines Zentrierabschnitts, der nach der Befestigung des zweiten Bauelements 'sichtbar' ist, ist es anschließend möglich die genaue Position der Anschlusskabel zu finden. Dabei soll der Zentrierabschnitt entweder länger sein als der Abstand zwischen dem ersten und dem zweiten Bauelement und somit aus dem zweiten Bauelement herausschauen oder es soll ein Magnet in diesem platziert werden, sodass die Position der Anschlusskabel nach der Montage des zweiten Bauelements mit einem Magnetsuchgerät gefunden werden kann. Wenn die Lage der Positioniervorrichtung und somit der Anschlusskabel bestimmt wurde, kann mittels eines Kreisbohrers eine Öffnung in der gewünschten Größe angebracht werden. Die Positioniervorrichtung soll nun von dem ersten Bauteil gelöst werden und die Anschlusskabel an dieser durch die Öffnung heraus gezogen werden.

Diese Art Positioniervorrichtung weist jedoch einige Nachteile auf. Zum Beispiel ist bekannt, dass die Verklebung, mit der die Positioniervorrichtung an dem ersten Bauelement befestigt wird, häufig nicht zuverlässig hält, da die Oberfläche des Bauelements Schmutzpartikel aufweist und häufig sehr rau ist. Für den Fall, dass die Verklebung hält, ist es nicht mehr ohne weiteres möglich, die Positioniervorrichtung von dem Bauelement zu lösen und es könnten Beschädigungen an dem ersten Bauelement auftreten. Auch eine Verschraubung der Positioniervorrichtung hätte bei der Entnahme Nachteile, da die Schrauben durch die kleinen Bohröffnungen gelöst werden müssten. Hinzu kommt, dass beim Durchstoßen des zweiten Bauelements mit der Positioniervorrichtung die Schrauben aus dem ersten Bauelement ausbrechen oder großflächige Beschädigungen an der äußeren Oberfläche des ersten Bandelements entstehen können. Bei dickeren Wandaufbauten oder mehrlagigen Wandaufbauten ist ein Durchstoßen gar nicht mehr möglich. In diesen Fällen könnte zwar die Vorrichtung mit einem Magneten eingesetzt werden, diese hat jedoch den Nachteil, dass Verwechselungen mit gegebenenfalls verwendeten magnetischen Schrauben auftreten könnten und somit Löcher an falsche Positionen gebohrt werden.

### Aufgabe

Der vorliegenden Erfindung liegt nunmehr die Aufgabe zugrunde, ein Installationsverfahren der eingangs beschriebenen Art dahingehend weiterzuentwickeln, dass die Installation von Anschlusskabeln in Trockenbauwänden vereinfacht wird.

### Lösung

Ausgehend von einem Verfahren der eingangs beschriebenen Art wird die zugrunde liegende Aufgabe dadurch gelöst, dass
f) das Fixierelement so an dem ersten Bauelement verankert wird, dass es auf einer dem Innenraum abgewandten Außenseite des ersten Bauelements erkennbar ist und
g) der Markierungsdurchbruch in dem zweiten Bauelement von der Außenseite des ersten Bauelements her durch den Innenraum hindurch geschaffen wird.

Trockenbauwände bestehen aus einer Haltekonstruktion und zwei Bauelementen die einen Innenraum bilden. Die Außenseiten der Bauelemente befinden sich an der dem Innenraum abgewandten Seiten und die Innenseiten liegen sich gegenüber und liegen somit auf der dem Innenraum zugewandten Seiten. Bei der Montage der Trockenbauwände wird zuerst eine Haltekonstruktion installiert. An dieser Haltekonstruktion wird dann das erste Bauelement angebracht. Es folgt die Verlegung von Anschlusskabeln im Innenraum. Dazu wird die Position einer Installationsstelle, an der später auf dem zweiten Bauelement Anschlüsse mit Verteilerdosen, Schalter, Lampen o. ä. erfolgen, auf dem ersten Bauelement vermessen. Diese Vermessung findet meist an der Innenseite des ersten Bauelements statt, was den Vorteil hat, dass die Vermessung in dem Raum stattfindet, in dem später die Anschlüsse angebracht werden. Somit muss keine spiegelverkehrte Vermessung auf der Außenseite des ersten Bauelements stattfinden, wobei die Außenseite des ersten Bauelements anders aufgeteilt sein kann, da dort beispielsweise andere Höhen, Breiten oder zusätzlich angeordnete Wände vorhanden sein können. Es folgt eine Markierung, z. B. in Form einer Bohrung, in dem ersten Bauelement, damit die Position der Installationsstelle erfindungsgemäß auf der Außenseite des ersten Bauelements sichtbar wird. Das Fixierelement soll an dieser Position befestigt werden. Nach der Montage des zweiten Bauelements soll anschließend ein Markierungsdurchbruch von dem ersten Bauelement aus, durch den Innenraum in dem zweiten Bauelement geschaffen werden. Es wird somit eine Lageinformation auf die Außenseite des ersten Bauelements übertragen und diese später dazu genutzt, die Lageinformation von der Außenseite des ersten Bauelements auf die Außenseite des zweiten Bauelements rück zu übertragen.

Die Erfindung weiter ausgestaltet ist vorgesehen, dass zumindest ein Teil des Fixierteils von der dem Innenraum abgewandten Außenseite des ersten Bauelements her in dieses eingebracht wird. An dem ersten Bauelement wurden die Installationsstellen des zweiten Bauelements von der Innen- oder Außenseite her vermessen. Diese Installationsstellen wurden so markiert, dass diese auf der Außenseite des ersten Bauelements sichtbar sind, damit ein Verankerungsteil des Fixierteils von dieser Seite in das Bauelement eingebracht werden kann. Der Markierungsdurchbruch in dem zweiten Bauelement soll anschließend durch den Markierungsdurchbruch in dem ersten Bauelement bzw. durch den Markierungsdurchbruch in dem Verankerungsteil durchgeführt werden.

Eine besonders vorteilhafte Ausgestaltung der Erfindung besteht darin, dass der Markierungsdurchbruch in dem ersten Bauelement vor der Verankerung des Fixierelements bereits in letzterem vorhanden ist. Der Markierungsdurchbruch soll also nicht in Form eines Loches in dem ersten Bauelement ausgestaltet sein, sondern in dem Fixierelement, wobei dieses bereits den Markierungsdurchbruch aufweist. Die Anbringung des Markierungsdurchbruchs, z. B. in Form einer Bohrung, durch das bereits eingesetzte Fixierelement, würde dem Bauelement hohe Beanspruchung abverlangen. Es könnte dabei sogar zur Beschädigung des Bauelements kommen. Der vorher in dem Fixierelement angebrachte Markierungsdurchbruch kann ein eventuelles Herausbrechen des Fixierelements und ein damit verbundenes Verrutschen desgleichen und der daran befestigten Anschlusskabel verhindern.

Ferner wird vorgeschlagen, dass der Markierungsdurchbruch in dem ersten Bauelement und/oder der Markierungsdurchbruch in dem zweiten Bauelement durch eine Bohrung geschaffen wird. Der Markierungsdurchbruch in dem ersten Bauelement soll wie zuvor beschrieben, bereits im uneingebauten Zustand in dem Fixierelement vorhanden sein. Der Markierungsdurchbruch in dem Fixierelement kann z. B. durch eine Bohrung angebracht werden. In einer weiteren Ausführungsform kann das Fixierelement auch ein Spritzgussteil sein, in dem der Markierungsdurchbruch bereits vorgesehen ist. Durch diesen Markierungsdurchbruch kann anschließend der Markierungsdurchbruch in dem zweiten Bauelement gebohrt werden. Dazu wird ein Bohrkopf mit einem geringeren Durchmesser, als die Öffnung des Markierungsdurchbruchs des ersten Bauelements, durch diesen Markierungsdurchbruch hindurch geschoben, um anschließend in dem zweiten Bauelement einen zweiten Markierungsdurchbruch zu schaffen. An diesen Markierungsdurchbruch kann daraufhin mit einer Lochsäge ein gewünschter Installationsdurchbruch für die Anschlüsse geschaffen werden. Da der Markierungsdurchbruch sehr klein ist, besteht die Möglichkeit, eine Lochsäge mit einem Durchmesser zu wählen der genau der Größe der anzubringenden Anschlusselemente entspricht, dabei können auch sehr kleine Durchmesser gewählt werden.

Die Erfindung weiter ausgestaltend ist vorgesehen, dass der Markierungsdurchbruch in dem zweiten Bauelement einen Durchmesser kleiner als 7 mm, vorzugsweise kleiner als 6 mm, vorzugsweise kleiner als 5 mm, aufweist. Somit können Verteilerdosen angebracht werden, die einen Durchmesser von z. B. 68 mm aufweisen, aber auch kleinere Durchmesser für z. B. Lampen sind möglich ohne dass dabei ein Teil des zweiten Bauelements wieder verschlossen und zugespachtelt werden muss. Hinzu kommt, dass der Durchmesser auch nicht zu klein sein darf, damit der Bohrer noch durch das Fixierelement durch passt, ohne dass dieses dabei beschädigt wird.

Vorzugsweise ist vorgesehen, dass ein eingangs beschriebenes Fixierelement durch folgende Merkmale ergänzt wird:
a) einen Verankerungsabschnitt zur kraftschlüssigen und/oder formflüssigen und/oder stoffschlüssigen Verbindung mit dem ersten Bauelement, wobei der Verankerungsabschnitt sich in einem verankerten Zustand des Fixierelements von einer inneren Oberfläche des ersten Bauelements zu einer äußeren Oberfläche des ersten Bauelements erstreckt,
b) einen Fixierabschnitt der in dem verankerten Zustand des Fixierelements außerhalb des Bauelements angeordnet ist und mindestens ein Fixiermittel zur unmittelbaren oder mittelbaren Fixierung eines freien Endes oder Endabschnitts eines Anschlusskabels aufweist,
c) einen durch den Verankerungsabschnitt und den Fixierabschnitt hindurch verlaufenden Durchbruch, der sich in dem verankerten Zustand des Fixierelements von der einen Oberfläche des Bauelements zu der anderen Oberfläche des Bauelements erstreckt.

Gemäß Punkt a) weist das Fixierelement einen Verankerungsabschnitt auf. Dieser Verankerungsabschnitt befindet sich auf einem Verankerungsteil und erstreckt sich von der äußeren Oberfläche des ersten Bauelements bis zu inneren Oberfläche des ersten Bauelements. Der Verankerungsabschnitt hält den Verankerungsteil an der richtigen Position und soll eine Drehung im eingebauten Zustand verhindern, damit die Befestigung eines Fixiermittels an der Innenseite des Bauelements auch ohne Gegenhalt auf der Außenseite möglich ist. An der Außenseite des ersten Bauelements soll der Verankerungsabschnitt, z. B. in Form eines Schraubenkopfes sichtbar sein, damit es später möglich ist von dort aus einen Markierungsdurchbruch in dem zweiten Bauelement zu schaffen. An der Innenseite des ersten Bauelements befindet sich dem Verankerungsabschnitt gegenüberliegenden Ende ein Fixierabschnitt mit einem Fixiermittel und ist somit auch von der Innenseite her sichtbar.

Gemäß Punkt b) befindet sich an dem freien Ende an der Innenseite des Bauelements ein Fixiermittel um die Anschlusskabel zu befestigen. Durch die Fixierung der Anschlusskabel mit dem Fixiermittel wird ein verrutschen der Anschlusskabel während der Arbeiten des Trockenbauers verhindert. Das Fixiermittel kann z. B. aus Kabelbindern die an einem Fixierteil befestigt werden oder aus Klemmvorrichtungen oder Bügeln die an dem Fixierteil befestigt sind bestehen.

Gemäß Punkt c) befindet sich der Durchbruch in dem Verankerungsabschnitt und dem Fixierabschnitt. Um einen Markierungsdurchbruch in dem zweiten Bauelement zu schaffen muss der Markierungsdurchbruch im ersten Bauelement durch das gesamte Fixierelement verlaufen.

Vorzugsweise ist vorgesehen, dass der Verankerungsabschnitt zumindest ungefähr rotationssymmetrisch ist und einen Durchmesser besitzt der kleiner als 20mm, vorzugsweise kleiner als 18 mm, vorzugsweise kleiner als 16 mm, beträgt. Der Verankerungsabschnitt sollte eine Größe aufweisen, die den Durchbruch in dem Fixierelement ohne Probleme ermöglicht und zusätzlich nicht zu groß ist, damit eine einfache Montage des Verankerungsabschnitts möglich ist, ohne dabei Schäden in dem ersten Bauelement zu verursachen.

Vorzugsweise ist das Fixierelement zweiteilig ausgebildet und besteht aus einem den Fixierabschnitt aufweisenden Fixierteil und aus einen den Verankerungsabschnitt aufweisenden Verankerungsteil, wobei das Fixierteil und das Verankerungsteil in dem verankerten Zustand des Fixierelements mittels einer Schraubverbindung und/oder einer Klemmverbindung und/oder einer Schnappverbindung miteinander verbunden sind. Das Fixierelement besteht aus zwei Teilen, die miteinander verbunden werden. Weiterhin besteht das Verankerungsteil aus einem Verankerungsabschnitt und einem Fixierabschnitt. An diesem Fixierabschnitt soll das Fixierteil angebracht werden, an dem wiederum mit Fixiermitteln die Anschlusskabel befestigt werden. Dabei können sich an dem Fixierteil z. B. Klemmen befinden an denen Anschlusskabel befestigt werden oder Bohrungen an die mit Kabelbindern die Anschlusskabel befestigt werden. Die Verbindung zwischen dem Verankerungsteil und dem Fixierteil kann so ausgestaltet sein, dass die beiden Teile wieder voneinander getrennt werden können. Dies hätte den Vorteil, dass beim Herausholen der Anschlusskabel aus dem Hohlraum, nachdem der Installationsdurchbruch in dem zweiten Bauelement geschaffen wurde, die Anschlusskabel nicht durch den Installationsdurchbruch hindurch von dem Fixierteil gelöst werden müssten. Es wäre in diesem Fall möglich das Fixierteil, welches z. B. eine Halterung aufweist mit der man das Fixierelement leicht von dem Verankerungsteil lösen kann, mit den daran befestigten Anschlusskabeln herauszuholen und anschließend die gut zugänglichen Anschlusskabel von dem Fixiermittel zu lösen.

Vorzugsweise ist vorgesehen, dass das Fixierteil und das Verankerungsteil von gegenüberliegenden Seiten des ersten Bauelements her zusammengefügt werden. Das Verankerungsteil wird von der Außenseite des ersten Bauelements in diesem eingebracht. Das Verankerungsteil besteht wie zuvor beschrieben aus zwei Abschnitten, wovon im eingebauten Zustand der Verankerungsabschnitt sich in dem ersten Bauelement befindet und der Fixierabschnitt an der Innenseite des ersten Bauelements heraussteht und sichtbar ist. An dem Fixierabschnitt wird das Fixierteil von der Innenseite her befestigt.

Ferner ist noch vorgesehen, dass das Fixierelement ein Schutzelement aufweist, wobei das Schutzelement auf einer dem ersten Bauelement abgewandten Außenseite des Fixierelements angeordnet ist und einen Durchbruch aufweist, der koaxial mit dem Durchbruch durch den Verankerungsabschnitt und den Fixierabschnitt des Fixierelements orientiert ist. Das Schutzelement kann z. B. in Form einer Hülse vorliegen. Dieses Schutzelement kann dann an der Innenseite des ersten Bauelements an dem Verankerungsteil und/ oder Fixierteil beispielsweise durch einer Schraubverbindung befestigt werden und bietet somit einen zusätzlichen Schutz der Anschlusskabel bei der Bohrung des Markierungsdurchbruchs in dem zweiten Bauelement. Anschließend wäre es möglich diesen Stift abzumontieren und gegebenenfalls wieder zu verwenden. Alternativ können das Schutzelement und das Fixierteil einteilig ausgestaltet sein, z. B. in Form eines Spritzgussbauteils. Damit wäre ein leichter Zugang zu dem Fixierteil möglich um dieses aus dem Installationsdurchbruch herauszuholen.

Wenn ein Außendurchmesser des Fixierteils zwischen 67 mm und 69 mm, vorzugsweise 68 mm, beträgt, besteht bei beschränkter Breite des für die Installation zur Verfügung stehenden Raumes (z.B. zwischen zwei Stützen) nicht die Gefahr, dass nach Montage des zweiten Bauelements beim Fräsen des Lochs für z.B. eine Hohlraumdose mit einem Durchmesser von 68 mm angrenzende Stützen getroffen und evtl. beschädigt werden oder das Fräswerkzeug durch das metallische Stützenmaterial vorzeitig verschleißt.

### Ausführungsbeispiele

Die vorstehend beschriebene Erfindung wird nachfolgend anhand eines Ausführungsbeispiels, das in den Figuren dargestellt wird, näher erläutert.

Es zeigt:
- Fig. 1:: Einen Aufbau einer Trockenbauwand vor der Elektroinstallation von einer Innenseite eines ersten Bauelements.
- Fig. 2:: Die gleiche Ansicht wie in Figur 1, in diesem Fall wurde bereits die Installationsstelle vermessen und ein Anschlusskabel an diese Stelle gelegt.
- Fig. 3:: Einen Querschnitt in vertikaler Richtung eines ersten Bauelements und einem Ausschnitt eines Hohlraumes während der Anbringung eines Verankerungsteils von der Außenseite des ersten Bauelements.
- Fig. 4:: Eine Vergrößerung des Trockenbauwandausschnitts aus Figur 3 mit eingebautem Verankerungsteil.
- Fig. 5:: Eine Vergrößerung des Trockenbauwandausschnitts aus Figur 3 mit einem komplett montierten Fixierteil und den anschließend daran montierten Anschlusskabeln.
- Fig. 6:: Einen Querschnitt in vertikaler Richtung der Trockenbauwand mit einem montierten Fixierelement.
- Fig. 7:: Eine Vergrößerung des Trockenbauwandausschnitts aus Figur 4 mit einem Bohrer, der durch einen Durchbruch hindurch geführt wird.
- Fig. 8:: Einen Querschnitt in vertikaler Richtung der Trockenbauwand mit der Anbringung eines Markierungsdurchbruchs in einem zweiten Bauelement.
- Fig. 9:: Einen Querschnitt in vertikaler Richtung der Trockenbauwand während der Anbringung eines Installationsdurchbruches an einer Position eines Markierungsdurchbruches mit einer Lochsäge.
- Fig. 10:: Einen Querschnitt in vertikaler Richtung der Trockenbauwand während des Herausnehmens eines Fixierteils mit den daran befindlichen Abschlusskabeln.
- Fig. 11:: Eine Außenseite des zweiten Bauelements mit den herausgeholten Anschlusskabeln zur Montage mit Anschlüssen.

Der Übersichtlichkeit halber ist nicht jedes sich in den Figuren wiederholende Bauteil in jeder Figur erneut gekennzeichnet.

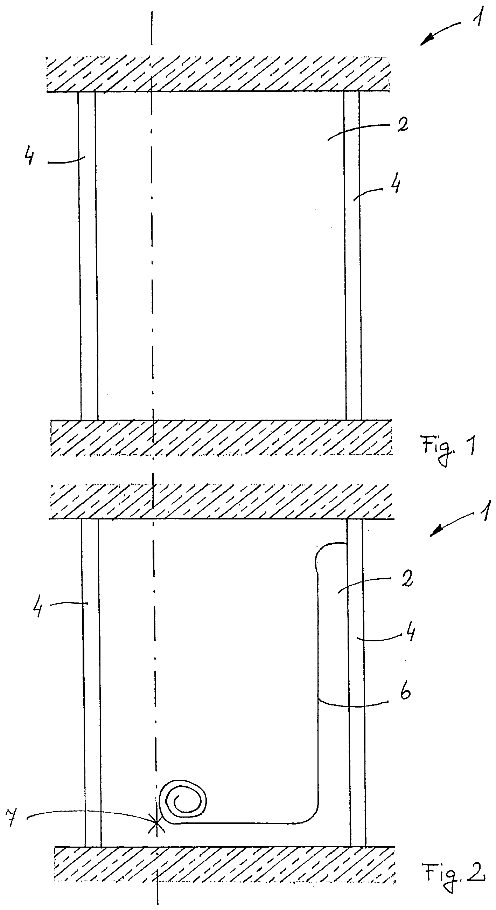

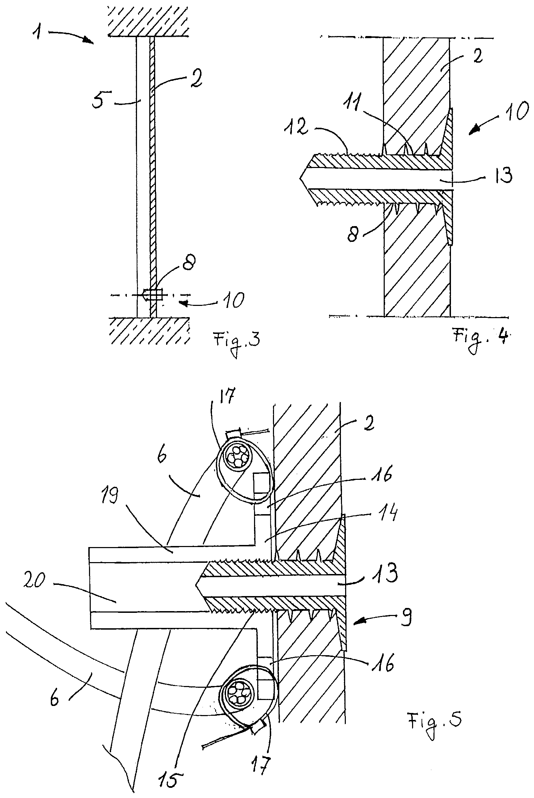

Eine fertige Trockenbauwand **1** besteht aus zwei Bauelementen **2, 3** und einer Haltekonstruktion **4.** Die beiden Bauelemente **2, 3** bilden einen Innenraum **5,** der Anschlusskabel **6** und eine Hohlraumdämmung enthält. Bei dem Bau von Trockenbauwänden **1** beginnt man mit dem Aufbau der Haltekonstruktion **4,** an welcher ein erstes Bauelement **2** befestigt wird. In Figur 1 ist dieser aufgebaute Teil der Trockenbauwand **1** dargestellt. Es erfolgt die Verlegung von Anschlusskabeln **6** in dem Innenraum **5,** wie in Figur **2** gezeigt wird. Dabei soll zuerst eine Installationsstelle **7,** in diesem Fall auf der Innenseite des ersten Bauelements **2** vermessen werden. Die Installationsstelle **7** markiert die Position, an der sich im fertig aufgebauten Zustand der Trockenbauwand **1** die Anschlüsse für Lampen, Verteilerdosen, Schalter u. ä. befinden sollen. An der Installationsstelle **7** wird ein Markierungsdurchbruch **8** in Form einer Bohrung geschaffen, durch die von der Außenseite des ersten Bauelements **2** ein Verankerungsteil **10** eines Fixierelements **9** angebracht werden soll, wie in Figur 3 zu sehen ist. Dieses Verankerungsteil **10** ist so ausgestaltet, dass sich in einem ersten Endabschnitt ein Verankerungsabschnitt **11** befindet, der in Form eines Gewindes, welches den Halt des Verankerungsteils **10** in dem Bauelement **2** ermöglicht, ausgestaltet ist. Des Weiteren befindet sich an einem dem ersten Endabschnitt gegenüberliegenden zweiten Endabschnitt des Verankerungsteils **10,** ein Fixierabschnitt **12,** ein Außengewinde mit einem kleineren Durchmesser als der des Verankerungsabschnitts **11.** Das Verankerungsteil **10** enthält zudem einen durchgehenden Durchbruch **13** in Form einer Bohrung.

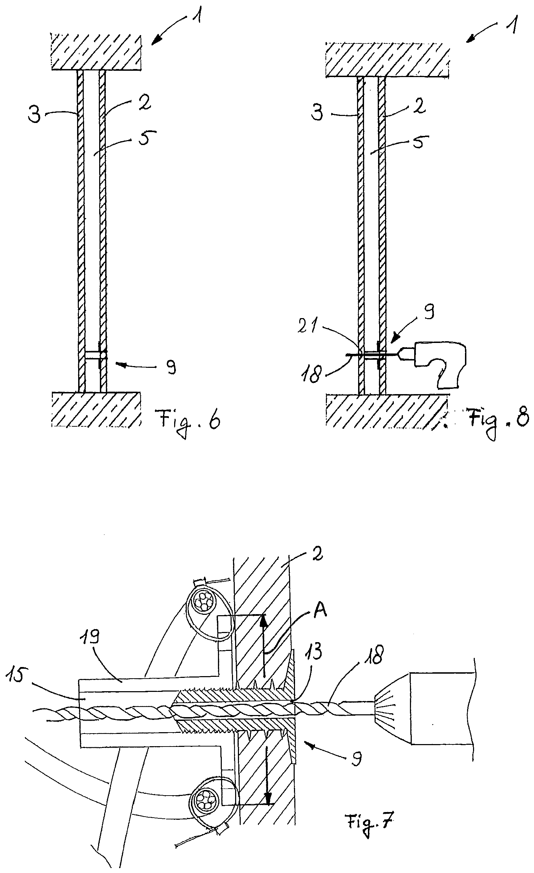

In Figur 4 wird das eingebaute Verankerungsteil **10** des Fixierelements **9** vergrößert dargestellt. An dem kleineren Gewinde, also dem Fixierabschnitt **12** soll auf der Innenseite des Bauelements **2** ein Fixierteil **14,** wie in Figur 5 abgebildet, z. B. in Form eines Flansches angebracht werden. In dem Fixierteil **14** befindet sich eine zentrische Bohrung **15** mit einem Innengewinde, welches mit dem Gewinde des Fixierabschnitts **12** korrespondiert. Es ist jedoch auch möglich, dass der Fixierabschnitt **12** und das Fixierteil **14** mittels einer Klemmverbindung oder einer Schnappverbindung miteinander verbunden sind. Aus Gewichtsgründen besteht dieses Fixierteil **14** aus Kunststoff. In einer kreisförmigen Anordnung befinden sich weitere Bohrungen **16** in dem Fixierteil **14.** An diesen Bohrungen **16** sollen dann Anschlusskabel **6** mit Fixiermitteln **17,** beispielsweise mit Kabelbindern, an dem Fixierteil **14** befestigt werden. Alternativ gibt es in einer hier nicht dargestellten Variante die Möglichkeit die Anschlusskabel **6** mit bereits an dem Fixierteil **14** vorhandenen Fixiermitteln **17,** wie z. B. Klemmen, an diesem zu befestigen. Da die genauen Installationsstellen **7** bekannt sind, können die Anschlusskabel **6** genau auf die gewünschte Länge gekürzt werden und sind weder zu kurz noch zu lang, wobei unnötiger Zug auf den Anschlusskabeln **6** oder Verschnitt vermieden werden kann. Nach Verlegung der Anschlusskabel **6** kann der Trockenbauer die Hohlraumdämmung anbringen, ohne dass dabei die Anschlusskabel **6** im besonderen Maße verrutschen können. Anschließend wird das zweite Bauelement **3,** wie in Figur 6 abgebildet, befestigt. Die Anschlusskabel **6** sind nun nicht mehr sichtbar.

Eine gemäß dem Stand der Technik notwendige zweite Einmessung der Anschlusskabel **6** kann bei Anwendung des erfindungsgemäßen Verfahrens entfallen, da das Verankerungsteil **10,** das in dem ersten Bauelement **2** befestigt wurde, den Ort des Fixierteils **14** im Innenraum **5** und somit der Ort der Anschlusskabel **6** anzeigt.

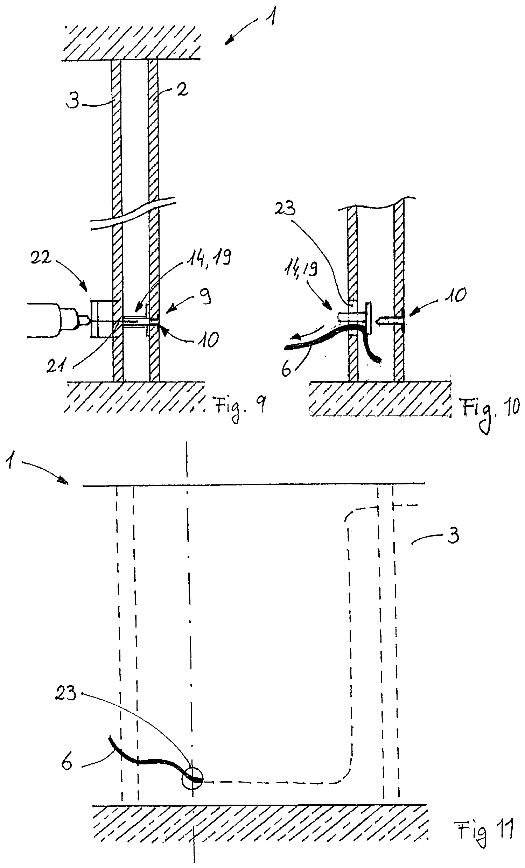

Figur 7 zeigt eine vergrößerte Darstellung des Fixierelements **9** durch das ein Bohrer **18** geführt wird. Damit die Anschlusskabel **6** vor dem Bohrer **18** geschützt sind, befindet sich an dem Fixierteil **14** noch ein Schutzelement **19,** dabei kann die Kombination des Fixierteils **14** und des Schutzelement **19** einteilig oder auch zweiteilig ausgebildet sein. Das Schutzelement **19** muss auch einen Durchbruch **20** enthalten, damit ein Bohrer durchgeführt werden kann. Der durchgehende Durchbruch **13** in dem Verankerungsteil **10** und dem Fixierteil 14 wird nun genutzt, um einen entsprechend kleinen Bohrer **18** von der Außenseite des ersten Bauelements **2** durch den Verankerungsteil **10** bis zur Innenseite des zweiten Bauelements **3** zu führen und dort mittels des Bohrers **18** einen Markierungsdurchbruch **21** zu bohren (Figur 8). Damit lässt sich die exakte Position der Anschlusskabel **6** auf der Außenseite des zweiten Bauelements **3** bestimmen. Mittels einer Lochsäge **22,** gemäß Figur 9, kann nun die gewünschte Größe eines jeweils notwendigen Installationsdurchbruchs **23** (beispielsweise für Verteilerdosen) aus dem zweiten Bauelement **3** herausgebohrt werden. Da die Anschlusskabel **6** nicht verrutschen können, brauchen diese nur noch, wie in Figur 10 und 11 dargestellt, mit dem Fixierteil **14** aus dem Installationsdurchbruch **23** herausgeführt und von dem Fixierteil **14** getrennt werden um anschließen an Verteilerdosen, Lichtschaltern u. ä. angeschlossen zu werden. Falls genügend Platz vorhanden ist oder sich kein Schutzelement **19** an dem Fixierteil **14** befindet, kann dieses auch in dem Innenraum **5** bleiben und werden die Anschlusskabel **6** durch den Installationsdurchbruch **23** von dem Fixierteil **14** gelöst. Durch den Einsatz des Fixierelements **9** wird eine unnötige Suche der Anschlusskabel **6** verhindert, was wiederum zu Zeitersparnissen und am Ende auch zu Kostenersparnissen führt.

### Bezugszeichenliste

- 1: Trockenbauwand
- 2: erstes Bauelement
- 3: zweites Bauelement
- 4: Haltekonstruktion
- 5: Innenraum
- 6: Anschlusskabel
- 7: Installationsstelle
- 8: Markierungsdurchbruch
- 9: Fixierelement
- 10: Verankerungsteil
- 11: Verankerungsabschnitt
- 12: Fixierabschnitt
- 13: Durchbruch
- 14: Fixierteil
- 15: Bohrung
- 16: Bohrung
- 17: Fixiermittel
- 18: Bohrer
- 19: Schutzelement
- 20: Durchbruch
- 21: Markierungsdurchbruch
- 22: Lochsäge
- 23: Installationsdurchbruch
- A: Außendurchmesser

## Patentansprüche

1. Verfahren zur Erstellung einer Elektroinstallation in einer Wand (1) die zwei parallel und in einem Abstand zu einander angeordnete plattenförmige Bauelemente (2, 3), einen zwischen den Bauelementen angeordneten Innenraum (5) und einer in dem Innenraum (5) befindlichen Haltekonstruktion (4) aufweißt, wobei zunächst ein erstes der beiden Bauelemente (2) an der Haltekonstruktion (4) befestigt wird, anschließend erste Installationsschritte durchgeführt werden, danach das zweite Bauelement (3) an der Haltekonstruktion (4) befestigt wird und schließlich die restlichen Installationsschritte durchgeführt werden, mit den folgenden Verfahrensschritten:
a) Vor der Befestigung des zweiten Bauelements (3) wird an einer Installationsstelle (7) an dem ersten Bauelement (2) ein Fixierelement (9) verankert,
b) In dem lediglich von dem ersten Bauelement (2) begrenzten Innenraum (5) wird mindestens ein Anschlusskabel (6) so verlegt, dass ein Endabschnitt des Anschlusskabels (6) an dem Fixierelement (9) verankert wird,
c) In dem zweiten Bauelement (3) wird von dem Innenraum (5) her ein Markierungsdurchbruch (21) an der Stelle des Fixierelements (9) geschaffen, um die Installationsstelle (7) auf einer Außenseite des zweiten Bauelements (3) zu markieren,
d) Nach der Befestigung des zweiten Bauelements (3) wird an der Installationsstelle (7) ein Installationsdurchbruch (23) in dem zweiten Bauelement (3) geschaffen,
e) Durch den Installationsdurchbruch (23) hindurch wird ein dem Endabschnitt zugeordnetes Ende des Anschlusskabels (6) ergriffen und die Elektroinstallation fertig gestellt,
**gekennzeichnet durch** die folgenden Verfahrensschritte:
f) das Fixierelement (9) wird so an dem ersten Bauelement (2) verankert, dass es auf einer dem Innenraum abgewandten Außenseite des ersten Bauelements (2) erkennbar ist und
g) der Markierungsdurchbruch (21) in dem zweiten Bauelement (3) wird von der Außenseite des ersten Bauelements (2) her durch den Innenraum (5) hindurch geschaffen.

2. Verfahren nach Anspruch 1, **dadurch gekennzeichnet, dass** zumindest ein Teil eines Fixierteils (14), von der dem Innenraum (5) abgewandten Außenseite des ersten Bauelements (2) her in dieses eingebracht wird.

3. Verfahren nach einem der Ansprüche 1 bis 2, **dadurch gekennzeichnet, dass** der Markierungsdurchbruch (8) in dem ersten Bauelement (2) vor der Verankerung des Fixierelements (9) bereits in letzterem vorhanden ist.

4. Verfahren nach Anspruch 1 oder 2, **dadurch gekennzeichnet, dass** der Markierungsdurchbruch (8) in dem ersten Bauelement (2) und/oder der Markierungsdurchbruch (21) in dem zweiten Bauelement (3) durch Bohren geschaffen wird.

5. Verfahren nach einem der Ansprüche 1 bis 4, **dadurch gekennzeichnet, dass** der Markierungsdurchbruch (21) in dem zweiten Bauelement (3) einen Durchmesser kleiner als 7 mm, vorzugsweise kleiner als 6 mm, vorzugsweise kleiner als 5 mm, aufweist.

## Claims

1. Method for installing an electrical installation in a wall (1) which comprises two parallel panel-shaped components (2, 3) spaced apart from each other, an inner space (5) arranged between the components, and a retaining structure (4) located in the inner space (5), wherein a first of the two components (2) is firstly attached to the retaining structure (4) and initial installation steps are then performed, after which the second component (3) is attached to the retaining structure (4) and finally the remaining installation steps are carried out, having the following method steps:
(a) Before the attachment of the second component (3), a fixing element (9) is anchored to the first component (2) at an installation position (7),
(b) In the inner space (5) bounded only by the first component (2), at least one connection cable (6) is laid such that an end section of the connection cable (6) is anchored to the fixing element (9),
(c) A marking through-hole (21) is made in the second component (3) from the direction of the inner space (5) at the position of the fixing element (9), in order to mark the installation position (7) on an outer side of the second component (3),
(d) After the attachment of the second component (3) an installation through-hole (23) is made in the second component (3) at the installation location (7),
(e) an end of the connection cable (6) assigned to the end section is grasped through the installation through hole (23) and the electrical installation is completed,
**characterized by** the following method steps:
(f) the fixing element (9) is anchored to the first component (2) such that said element is visible on an outer side of the first component (2) facing away from the inner space and
g) the marking through-hole (21) in the second component (3) is made through the inner space (5) from the outer side of the first component (2).

2. Method according to Claim 1, **characterized in that** at least part of a fixing part (14) is introduced into the first component from the outer side of said component (2) facing away from the inner space (5).

3. Method according to any of Claims 1 to 2, **characterized in that** the marking through-hole (8) in the first component (2) is already present in the latter before anchoring the fixing element (9).

4. Method according to Claim 1 or 2, **characterized in that** the marking through-hole (8) in the first component (2) and/or the marking through-hole (21) in the second component (3) are made by drilling.

5. Method according to any of Claims 1 to 4, **characterized in that** the marking through-hole (21) in the second component (3) has a diameter of less than 7 mm, preferably less than 6 mm, preferably less than 5 mm.

## Revendications

1. Procédé pour élaborer une installation électrique dans une paroi (1) qui comprend deux éléments de construction (2, 3) en forme de plaques disposés parallèlement et à distance l'un de l'autre, un espace intérieur (5) disposé entre les deux éléments de construction et une construction de retenue (4) se trouvant dans l'espace intérieur (5), un premier des deux éléments de construction (2) étant d'abord fixé sur la construction de retenue (4), les premières étapes d'installation étant exécutées ensuite, le deuxième élément de construction (3) étant après cela fixé sur la construction de retenue (4) et les étapes d'installation restantes étant finalement exécutées, avec les étapes de procédé suivantes :
a) un élément de fixation (9) est ancré à un point d'installation (7) sur l'élément de construction (2) avant la fixation du deuxième élément de construction (3),
b) dans l'espace intérieur (5) limité uniquement par le premier élément de construction (2), au moins un câble de connexion (6) est posé de telle manière qu'une section finale du câble de connexion (6) est ancrée sur l'élément de fixation (9),
c) dans le deuxième élément de construction (3), une percée de repérage (21) est créée depuis l'espace intérieur (5) à l'endroit de l'élément de fixation (9) pour repérer le point d'installation (7) sur un côté extérieur du deuxième élément de construction (3),
d) après la fixation du deuxième élément de construction (3), une percée d'installation (23) est créée sur le point d'installation (7) dans le deuxième élément de construction (3),
e) une extrémité affectée à la section finale du câble de connexion (6) est saisie à travers la percée d'installation (23) et l'installation électrique est achevée,
**caractérisé par** les étapes de procédé suivantes :
f) l'élément de fixation (9) est ancré sur le premier élément de construction (2) de telle manière qu'il peut être identifié sur un côté extérieur opposé à l'espace intérieur du premier élément de construction (2), et
g) la percée de repérage (21) dans le deuxième élément de construction (3) est créée depuis le côté extérieur du premier élément de construction (2) à travers l'espace intérieur (5).

2. Procédé selon la revendication 1, **caractérisé en ce qu'**au moins une partie d'une pièce de fixation (14) est déposée dans le premier élément de construction (2) depuis le côté extérieur opposé à l'espace intérieur (5) de celui-ci.

3. Procédé selon l'une quelconque des revendications 1 à 2, **caractérisé en ce que** la percée de repérage (8) dans le premier élément de construction (2) existe déjà dans ce dernier avant l'ancrage de l'élément de fixation (9).

4. Procédé selon la revendication 1 ou 2, **caractérisé en ce que** la percée de repérage (8) dans le premier élément de construction (2) et/ou la percée de repérage (21) dans le deuxième élément de construction (3) sont créées par perçage.

5. Procédé selon l'une quelconque des revendications 1 à 4, **caractérisé en ce que** la percée de repérage (21) dans le deuxième élément de construction (3) comporte un diamètre inférieur à 7 mm, de préférence inférieur à 6 mm, de préférence inférieur à 5 mm.
